**Europäisches Patentamt**

**European Patent Office**

**Office européen des brevets**

(19)

(11) Veröffentlichungsnummer: **0 082 207
B2**

(12) **NEUE EUROPÄISCHE PATENTSCHRIFT**

(45) Veröffentlichungstag der neuen Patentschrift:
**07.01.88**

(51) Int. Cl.⁴: **A 01 B 3/42**

(21) Anmeldenummer: **81110359.7**

(22) Anmeldetag: **11.12.81**

(54) **Drehpflug mit einer Rahmenschwenkeinrichtung.**

(30) Priorität: **04.12.81 DE 8135323 U**

(43) Veröffentlichungstag der Anmeldung:
**29.06.83 Patentblatt 83/26**

(45) Bekanntmachung des Hinweises auf die Patenterteilung:
**27.03.85 Patentblatt 85/13**

(45) Bekanntmachung des Hinweises auf die Entscheidung
über den Einspruch:
**07.01.88 Patentblatt 88/1**

(84) Benannte Vertragsstaaten:
**DE FR IT NL**

(56) Entgegenhaltungen:
**DE - A - 2 537 904
DE - C - 681 027
DE - C - 2 310 497
DE - C - 2 738 816
DE - U - 1 665 603
DE - U - 1 802 465**

(73) Patentinhaber: **Rabewerk Heinrich Clausing, D-4515 Bad
Essen 8 - Linne (DE)**

(72) Erfinder: **Schröer, Friedrich, Im Weidengrund 5,
D-4515 Bad Essen 1 (DE)**

(74) Vertreter: **Missling, Arne, Dipl.-Ing. et al, Patentanwälte
Dipl.-Ing. R. Schlee Dipl.-Ing. A. Missling
Bismarckstrasse 43, D-6300 Giessen (DE)**

EP 0 082 207 B2

ACTORUM AG

## Beschreibung

Die Erfindung betrifft einen Drehpflug, bei dem in der Arbeitsstellung des Pflugrahmens der Schwerpunkt des Pfluges furchenseitig zur Drehachse der Drehvorrichtung für das Wenden der Pflugkörper liegt, mit einem um eine im wesentlichen lotrechte, am drehbaren Teil des Pflugvordergestells angeordnete Achse frei verschwenkbaren Pflugrahmen, dessen Arbeitsstellung von einem Anschlag bestimmt ist.

Ein Pflug dieser Art ist aus der DE-C-68/027 bekannt.

Bei Drehpflügen mit mehreren Pflugkörpern, insbesondere bei Drehpflügen, bei denen der Schlepper neben der Furche fährt, muss vom Drehzylinder für das Wenden der Pflugkörper eine sehr hohe Drehenergie aufgebracht werden, um den weit seitlich neben der Drehachse liegenden Schwerpunkt anzugeben. In der zweiten Drehhälfte muss dann dafür Sorge getragen werden, dass die beim Absenken des Pflugrahmens auftretende Energie wieder vernichtet wird, damit der Pflug nicht hart auf die Anschläge aufschlägt, was für den Pflug eine hohe Beanspruchung bedeutet.

Aus der DE-PS 2 310 497 ist ein Drehpflug der eingangs genannten Art bekannt, bei dem vor jedem Wenden der Pflugkörper der Pflugrahmen mit seinem Schwerpunkt in oder in die Nähe der ideellen Drehachse verschoben und nach dem Wenden in die Arbeitsstellung zurückverschoben wird. Hierdurch wird erreicht, dass beim Wenden der Pflugkörper, d.h. beim halbgedrehten Pflug, der Schwerpunkt nahe oder in der reellen oder ideellen Drehachse liegt, so dass in der zweiten Drehhälfte der Schwerpunkt nicht oder nur wenig abgesenkt zu werden braucht. Allerdings ist hierfür ein relativ hoher Aufwand mit einem Verschiebezylinder, dessen Arbeitstakt auf den des Drehzylinders abgestimmt sein muss und somit entweder eine separate Steuerung erfordert oder aber Steuermittel, die eine richtige Abstimmung des Arbeitstaktes gewährleisten, nötig.

Der Erfindung liegt die Aufgabe zugrunde, einen Drehpflug der eingangs genannten Art so auszubilden, dass ein Schlagen des Pfluges beim Wenden mit einfachen Mitteln vermieden wird und zusätzlich eine Dreherleichterung eintritt.

Diese Aufgabe wird erfindungsgemäss dadurch gelöst, dass der Pflugrahmen über ein gelenkig angeordnetes Stützglied am Pflugvordergestell abgestützt ist, das mit einem Arbeitsspeicher versehen ist, der beim Verschwenken des Pflugrahmens aus seiner Arbeitsstellung um die im wesentlichen lotrechte Achse beim Wenden der Pflugkörper aufgeladen wird.

Das Stützglied kann entweder aus einem Spannschloss bestehen, dessen eines Ende in einem Langloch frei verschiebbar ist, wobei am Stützglied ein Arbeitsspeicher, z.B. in Form einer Feder, angreift. Dieser Arbeitsspeicher kann vorgespannt sein, so dass die Verschiebung des Schwerpunktes aufgrund des Eigengewichtes und der Lage des Schwerpunktes relativ zur Wendewelle in einem vorbestimmten Sinn gedämpft verläuft. Beim halbgedrehten Pflug tritt dann die maximale Verschiebung des Pflugrahmens zur reellen oder ideellen Drehachse hin ein, so dass in der zweiten Drehhälfte die gegebenenfalls im Pflugrahmen noch gespeicherte Energie zusätzlich durch Verschiebung des Schwerpunktes in die Arbeitsstellung hin abgebaut werden kann. Die Arbeitsstellung selbst kann der Pflug evtl. erst beim Wiedereinziehen in das Erdreich aufgrund der auf die Pflugkörper ausgeübten Kräfte erreichen. Die Arbeitsstellung des Pflugrahmens wird durch einen Anschlag bestimmt, der vorteilhaft verstellbar ausgebildet ist. Die maximale Einschwenkung des Pflugrahmens zur Drehachse hin wird entweder durch einen Anschlag begrenzt oder aber durch den Arbeitsspeicher, der diese Bewegung bei zunehmender Aufladung zum Stillstand bringt.

Die Stützstrebe kann auch aus einem Hydraulikzylinder bestehen, der mit einem Arbeitsspeicher verbunden ist. Dieser Arbeitsspeicher wie auch die Feder kann vorgespannt sein, damit beim Drehen der Pflugkörper in der ersten Drehhälfte eine kontinuierliche, gleichmässige Verschiebung des Pflugrahmens mit seinem Schwerpunkt zur Drehachse hin erfolgt. Der Vorteil dieser Anordnung besteht nicht nur darin, dass ein Schlagen des Pfluges vermieden wird, sondern durch die kontinuierliche Bewegung beim Drehvorgang wird auch die erforderliche Drehenergie reduziert, was zur Dreherleichterung beiträgt.

Gemäss einer weiteren vorteilhaften Ausführungsform der Erfindung weist ein Drehpflug eine Kulissenführung auf, an dessen Kulissenstein die im wesentlichen lotrecht liegende Achse des Pflugrahmens angeordnet ist. Am Kulissenstein sind des weiteren der Arbeitsspeicher und das Langloch angeordnet, in dem die Stützstrebe geführt ist. Diese Anordnung weist den Vorteil auf, dass mit Hilfe der Kulissenführung die Arbeitsbreite des ersten Pflugkörpers eingestellt werden kann, ohne dass die Zugpunktlage bzw. die Schnittrichtung der Pflugkörper relativ zur Pflugkoppel verändert wird.

Weitere vorteilhafte Ausgestaltungen der Erfindung gehen aus den Ansprüchen in Verbindung mit der Beschreibung und Zeichnung hervor.

Ein Ausführungsbeispiel der Erfindung ist im folgenden anhand der Zeichnung näher beschrieben, in dieser zeigt

Fig. 1 eine Draufsicht auf einen erfindungsgemäss ausgebildeten Pflug.

Fig. 2 eine Seitenansicht des in Fig. 1 dargestellten Pfluges und

Fig. 3 ein weiteres Ausführungsbeispiel der Erfindung.

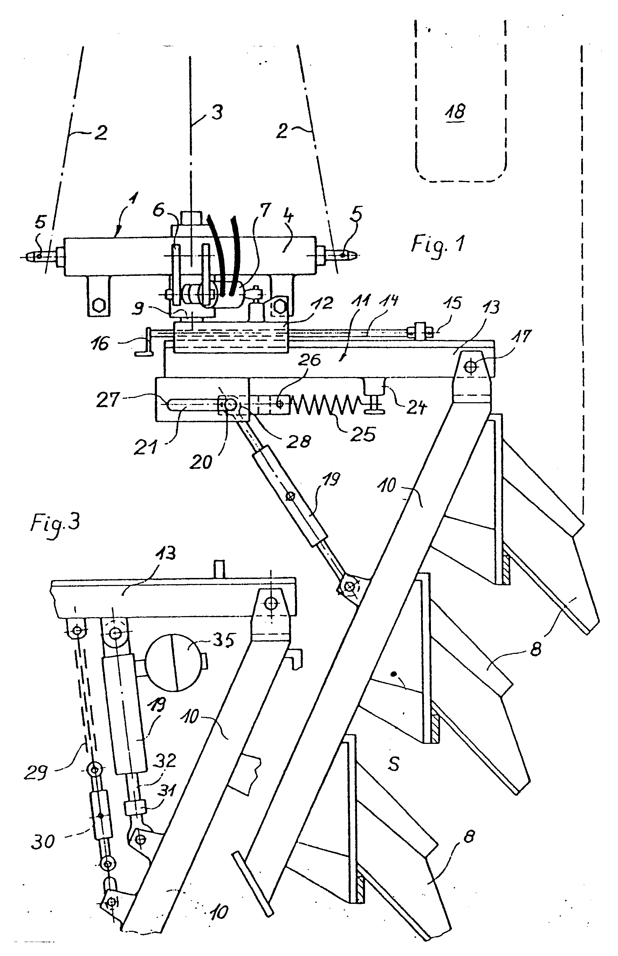

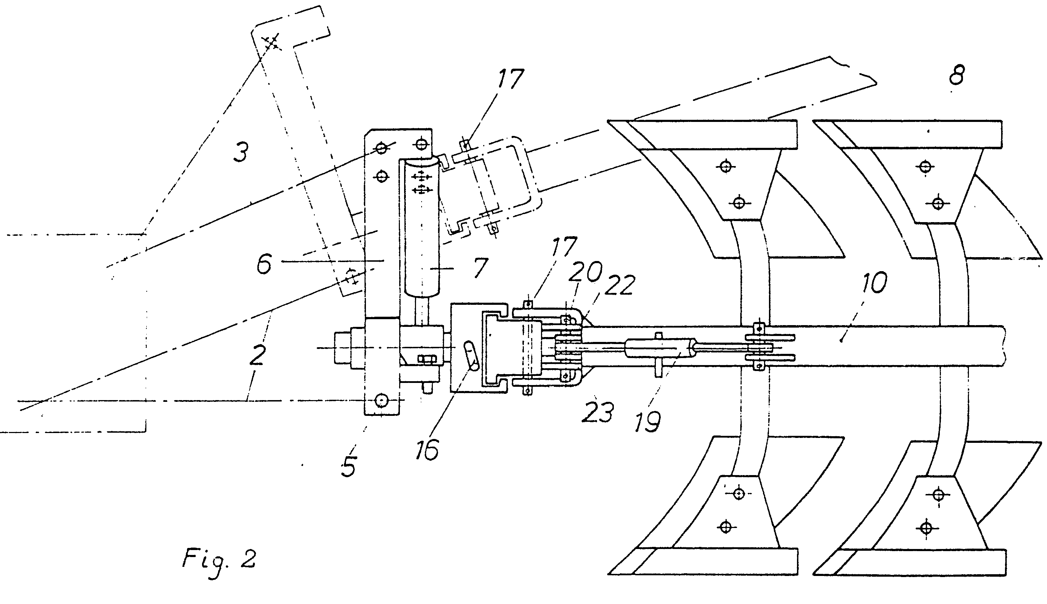

Der in den Fig. 1 und 2 dargestellte erfindungsgemässe Pflug hat ein Pflugvordergestell 1, an dem die unteren Lenker 2 und der obere Lenker 3 angreifen. Das Pflugvordergestell 1 besteht aus einem quer zur Fahrtrichtung angeordneten Balken 4 mit Anlenkzapfen 5 für die Unterlenker 2. Der Oberlenker 3 ist an einem Turm 6 angelenkt, an dem auch der Drehzylinder 7 für das Wenden der Pflugkörper 8 angreift. In dem Balken 4 ist die Wendewelle 9 des Pflugrahmens 10 gelagert.

Mit der Wendewelle 9 ist eine Kulissenführung 11 verbunden, die aus einer unmittelbar mit der Wendewelle verbundenen Führungseinheit 12 und einem Kulissenstein 13 besteht, der in der Führungseinheit verschiebbar ist. Zur Verschiebung dient eine Gewindespindel 14, deren freies Ende 15 drehbar am Kulissenstein befestigt ist. Das andere Ende der Gewindespindel 14 ist mit einer Handkurbel 16 versehen, mit deren Hilfe die Gewindespindel verdreht und der Kulissenstein 13 in der Führungseinheit 12 verschoben wird.

Der Kulissenstein 13 ist sehr breit ausgeführt, so dass das im wesentlichen lotrecht liegende Gelenk 17 des Pflugrahmens 10 sehr weit seitlich von der Wendewelle 9 zu liegen kommt. Der erste Pflugkörper 8 rückt damit gleichzeitig so weit seitlich, dass die Schlepperhinterräder 18 neben der Vorfurche auf dem ungepflügten Land fahren können. Der Schwerpunkt S des Pfluges liegt dann seitlich von der Achse 17 zur Wendewelle 9 hin verschoben, so dass beim ausgehobenen Pflug, wie er gestrichelt in Fig. 2 dargestellt ist, der Schwerpunkt um die Achse 17 auch anfangs ein Moment ausübt, das während der ersten Drehhälfte wächst und den Pflugrahmen in Richtung auf die Wendewelle 9 hin und in der zweiten Drehhälfte mindestens teilweise in die Arbeitsstellung zurückverschwenkt.

Am Pflugrahmen 10 greift ein Stützglied 19 an, das im Ausführungsbeispiel aus einem Spannschloss besteht. Das andere Ende des Spannschlosses ist mit einem Bolzen 20 versehen, der in einem Langloch 21 verschiebbar ist. Die Grösse des Langloches markiert die beiden Endstellungen für die freie Verschiebbarkeit des Pflugrahmens 10 um die Achse 17, und zwar die Arbeitsstellung und die Stellung, die maximal ungefähr nach der ersten Drehhälfte erreicht wird. In dieser Stellung gelangt der Schwerpunkt S in oder in die Nähe der reellen oder ideellen Drehachse, so dass beim Wenden der Pflugkörper der Pflugrahmen nicht oder nur wenig angehoben zu werden braucht.

Das Langloch wird durch einen Schlitz gebildet, der in zwei übereinanderliegenden Platten 22, 23 ausgebildet ist, wie aus Fig. 2 ersichtlich ist. Am Kulissenstein 13 ist ein Befestigungsnokken 24 für eine Feder 25 angeordnet, deren anderes Ende an einem mit dem Bolzen 20 verbundenen Stück 26 angreift. Bei einer Verschiebung des Pflugrahmens 10 in Richtung der Wendewelle 9 wird somit die Feder 25 mit zunehmender Verschiebung stärker gespannt, so dass die Bewegung des Pflugrahmens zur Wendewelle hin gedämpft wird und somit ein Schlagen des Bolzens an die Anschläge der Führung 21 vermieden wird.

In Fig. 1 ist die Arbeitsstellung dargestellt, d.h.,

der Bolzen 20 liegt am rechten Rand des Langloches 21 an. Wird der Pflugrahmen durch die Lenker 2,3 angehoben und gelangt in die in Fig. 2 gestrichelte Stellung, so hat bei der dargestellten Lage des Schwerpunktes S dieser bereits einen Hebelarm zur Achse 17, so dass der Pflugrahmen aufgrund seines Eigengewichts bereits vor Einleitung der Drehbewegung etwas zur Wendewelle hin verschoben werden kann. Diese Verschiebung wird durch die mit zunehmendem Verschiebeweg erhöhte Federspannung gedämpft. Bei der darauffolgenden Einleitung der Drehbewegung wird durch den Schwerpunkt ein grösseres Moment ausgeübt, so dass die Feder mit zunehmender Drehbewegung ständig weitergespannt wird. Die maximale Spannung wird nach Abschluss der ersten Drehhälfte erreicht. Hier liegt der Schwerpunkt in oder nahe der ideellen oder reellen Drehachse. In der zweiten Drehhälfte wird der Pflugrahmen zumindest etwas wieder von der Feder in seine Arbeitsstellung zurückgeschoben, wodurch weitere Energie verbraucht wird und der Pflugrahmen sich in der Endstellung praktisch schlagfrei auf die Endanschläge auflegt. Die Vorspannung der Feder kann auch so gewählt sein, dass der Pflug seine Arbeitsstellung dann wieder erreicht, wenn die Pflugkörper in das Erdreich eingezogen werden, wodurch ein entsprechendes Moment auf den Pflugrahmen ausgeübt wird, der diesen um die Achse 17 so weit wieder verschwenkt, bis dieser am Anschlag für die Arbeitsstellung anliegt.

Es ist auch denkbar, anstelle des Spannschlosses 19 einen Hydraulikzylinder einzusetzen, der mit einem Arbeitsspeicher in Form einer Gasdruckfeder verbunden ist, wie dies in Fig. 3 gezeigt ist. In diesem Fall kann auf eine Langlochführung verzichtet werden. Die Grösse der Verschiebung des Pflugrahmens beim Wenden ergibt sich aus dem möglichen Verschiebeweg des Hydraulikzylinders sowie der Vorspannung im Arbeitsspeicher. Normalerweise wird die Stellung des halbgedrehten Pfluges durch den Anschlag 27 gemäss Fig. 1 bestimmt. Wenn jedoch die Vorspannung im Arbeitsspeicher sehr hoch gewählt wird, braucht dieser Endanschlag in der halbgedrehten Stellung nicht erreicht zu werden. Auch hier nimmt der Pflug endgültig seine durch den Anschlag 28 bestimmte Arbeitsstellung dann wieder ein, wenn dieser durch die Kraft des Arbeitsspeichers und/oder aufgrund des Bodenwiderstandes beim Wiedereinziehen der Pflugkörper furchenseitig verschoben wird.

Bei dem Ausführungsbeispiel nach Fig. 3 besteht das Stützglied 19 aus dem Hydraulikzylinder und einem Arbeitsspeicher in Form eines Druckspeichers 35. Der Endanschlag für die Arbeitsstellung wird durch eine Kette 29 erhalten, deren Länge mit Hilfe eines Spannschlosses 30 einstellbar ist. Die eingeschwenkte Stellung des Pflugrahmens 10 wird durch eine auf der Kolbenstange 32 des Hydraulikzylinders 19 aufgeschraubte Mutter 31 eingestellt. Bei diesem Ausführungsbeispiel kann aufgrund der Längenverschiebbarkeit des Stützgliedes 19 auf eine Langlochführung gemäss dem Ausführungsbeispiel nach Fig. 1 und 2 verzichtet werden.

**Patentansprüche**

1. Drehpflug, bei dem in der Arbeitsstellung des Pflugrahmens (10) der Schwerpunkt (S) des Pfluges furchenseitig zur Drehachse (9) der Drehvorrichtung für das Wenden der Pflugkörper (8) liegt, mit einem um eine im wesentlichen lotrechte, am drehbaren Teil des Pflugvordergestells angeordnete Achse (17) frei verschwenkbaren Pflugrahmen (10), dessen Arbeitsstellung von einem Anschlag (28) bestimmt ist, dadurch gekennzeichnet, dass der Pflugrahmen (10) über ein gelenkig angeordnetes Stützglied (19) am Pflugvordergestell (1) abgestützt ist, das mit einem Arbeitsspeicher versehen ist, der beim Verschwenken des Pflugrahmens (10) aus seiner Arbeitsstellung um die im wesentlichen lotrechte Achse (17) beim Wenden der Pflugkörper (8) aufgeladen wird.

2. Drehpflug nach Anspruch 1, dadurch gekennzeichnet, dass das Stützglied (19) ein Spannschloss ist, dessen eines Ende in einem Langloch (21) geführt ist, das zwei die Endstellung des Pflugrahmens (10) bestimmende Anschläge (27, 28) bildet.

3. Drehpflug nach Anspruch 2, dadurch gekennzeichnet, dass am Stützglied (19) eine Feder (25) angreift.

4. Drehpflug Anspruch 3, dadurch gekennzeichnet, dass die Feder (25) zwischen Stützglied (19) und Pflugvordergestell (1) angeordnet ist.

5. Drehpflug nach einem der Ansprüche 2 bis 4, dadurch gekennzeichnet, dass das Langloch (21) am Pflugvordergestell (1) angeordnet ist.

6. Drehpflug nach Anspruch 5, dadurch gekennzeichnet, dass das Langloch (21) senkrecht zur Pflugrichtung liegt.

7. Drehpflug nach Anspruch 1, dadurch gekennzeichnet, dass das Stützglied (19) ein Hydraulikzylinder ist, der mit einem Druckspeicher verbunden ist.

8. Drehpflug nach einem der Ansprüche 1 bis 7, dadurch gekennzeichnet, dass die im wesentlichen lotrecht liegende Achse (17) des Pflugrahmens (10) an einem Kulissenstein (13) angeordnet ist, der in einer Führungseinheit (12) einer Kulissenführung (11) verschiebbar ist, die mit der Wendewelle (9) des Pfluges verbunden ist.

9. Drehpflug nach einem der Ansprüche 1 bis 8, dadurch gekennzeichnet, dass der Arbeitsspeicher vorgespannt ist.

**Claims**

1. A half-turn plough in which, in the operating position of the plough frame (10), the centre of gravity of the plough lies on the side of the furrow with respect to the axis of rotation (9) of the turning device for turning the plough body (8), including a plough frame (10) which is arranged at the pivotable portion of the plough forecarriage (1) and which may be freely pivoted about a substantially vertical axis (17), the operating position of this plough frame being determined by a stop (28), wherein the plough frame (10) is supported on the plough forecarriage (1) via a support member (19), disposed in an articulated manner, which is provided with an operating store that is charged during the pivotal movement of the plough frame (10) from its operating position about the substantially vertical axis (17) during turning of the plough body (8).

2. A half-turn plough according to claim 1, wherein the support member (19) is a tie rod one of whose ends is guided in an elongate aperture (21) which forms two stops (27, 28) determining the end positions of the plough frame (10).

3. A half-turn plough according to claim 2, wherein a spring (25) acts on the support member (19).

4. A half-turn plough according to claim 3, wherein the spring (25) is disposed between the support member (19) and the plough forecarriage (1).

5. A half-turn plough according to any one of claims 2 to 4, wherein the elongate aperture (21) is provided in the plough forecarriage (1).

6. A half-turn plough according to claim 5, wherein the elongate aperture (21) is perpendicular to the direction of ploughing.

7. A half-turn plough according to claim 1, wherein the support member (19) is a hydraulic cylinder connected to a pressure store.

8. A half-turn plough according to any one of claims 1 to 7, wherein the substantially vertically disposed axis (17) of the plough frame (10) is disposed on a sliding block (13) which may be displaced in a guide unit (12) of a connecting link guide (11) which is connected with the turning shaft (9) of the plough.

9. A half-turn plough according to any one of claims 1 to 8, wherein the operating store is pressurised.

**Revendications**

1. Charrue réversible dans laquelle, dans la position de travail du châssis de charrue (10), le centre de gravité (S) de la charrue est situé du côté du sillon par rapport à l'axe de rotation (9) du dispositif de pivotement servant au retournement des corps de charrue (8), avec un chassis de charrue (10) pouvant pivoter librement autour d'un axe (17) disposé à la partie pivotante du châssis avant de charrue (1) sensiblement vertical dont la position de travail est déterminée par une butée (28), caractérisée en ce que le châssis de charrue (10) est soutenu par l'intermédiaire d'un organe d'appui (19) disposé avec articulation sur le châssis avant de charrue (1), organe qui est pourvu d'un accumulateur d'énergie qui est chargé lors du pivotement du châssis de charrue (10) hors de sa position de travail autour de l'axe (17) sensiblement vertical pendant le retournement des corps de charrue (8).

2. Charrue réversible selon la revendication 1, caractérisée en ce que l'organe d'appui (19) est un tendeur dont une extrémité est guidée dans un trou (21) de forme allongée, qui forme les butées (27, 28) déterminant les positions d'extrémité du châssis de charrue (10).

3. Charrue réversible selon la revendication 2, caractérisée en ce qu'un ressort (25) agit sur l'organe d'appui (19).

4. Charrue réversible selon la revendication 3, caractérisée en ce que le ressort (15) est disposé entre l'organe d'appui (19) et le châssis avant de charrue (1).

5. Charrue réversible selon une des revendications 2 à 4, caractérisée en ce que le trou (21) de forme allongée est disposé sur le châssis avant de charrue (1).

6. Charrue réversible selon la revendication 5, caractérisée en ce que le trou (21) de forme allongée est placé perpendiculairement à la direction du labour.

7. Charrue réversible selon la revendication 1, caractérisée en ce que l'organe d'appui (19) est un cylindre hydraulique qui est relié à un accumulateur de pression.

8. Charrue réversible selon une des revendications 1 à 7, caractérisée en ce que l'axe (17) situé sensiblement verticalement, du châssis de charrue (10), est disposé sur un coulisseau (13) qui peut se déplacer dans un élément de guidage (12) d'un guidage de coulisse (11) relié à l'arbre de retournement (9) de la charrue.

9. Charrue réversible selon une des revendications 1 à 8, caractérisée en ce que l'accumulateur d'énergie est précontraint.

Fig. 1

Fig.3

Fig. 2

0 082 207